# EUROPEAN PATENT SPECIFICATION

(11) **EP 2 912 659 B1**
(45) Date of publication and mention of the grant of the patent: **21.12.2016**
(21) Application number: 13783214.3
(22) Date of filing: 18.10.2013
(51) Int. Cl.: G10L 15/24, G06F 3/01, G06K 9/00, G06K 9/62, A63F 13/424, A63F 13/213, G10L 15/22

(54) **AUGMENTING SPEECH RECOGNITION WITH DEPTH IMAGING**
ERWEITERUNG DER SPRACHERKENNUNG MIT TIEFENBILDGEBUNG
AUGMENTATION DE RECONNAISSANCE DE PAROLE À L'AIDE D'UNE IMAGERIE DE PROFONDEUR

(30) Priority: 26.10.2012 US 201213662293
(43) Date of publication of application: 02.09.2015
(73) Proprietor: Microsoft Technology Licensing, LLC, Redmond, WA 98052 (US)
(72) Inventor: KAPUR, Jay, Redmond, Washington 98052-6399 (US); TASHEV, Ivan, Redmond, Washington 98052-6399 (US); SELTZER, Mike, Redmond, Washington 98052-6399 (US); HODGES, Stephen, Edward, Redmond, Washington 98052-6399 (US)
(74) Representative: Fischer, Michael Maria
(86) International application number: PCT/US2013/065793
(87) International publication number: WO 2014/066192

(56) References cited:
- WO-A1-2013/188002
- US-A1- 2002 116 197
- US-A1- 2004 046 736
- US-A1- 2004 193 413
- US-A1- 2009 138 805
- US-A1- 2010 070 268
- US-A1- 2011 257 971

## Description

### BACKGROUND

Computerized speech recognition seeks to identify spoken words from audio information, such as from audio signals received via one or more microphones. An example of computerized speech recognition is described in US 2009/0138805 A1. However, ambiguities may arise in identifying spoken words in the audio information. Further, the context of the spoken words, for example, whether the spoken words were intended to be a speech input to a computing device, may not be easily determined from such audio information.

### SUMMARY

Embodiments related to the use of depth imaging to augment speech recognition are disclosed. For example, one disclosed embodiment provides, on a computing device, a method including receiving depth information of a physical space from a depth camera, receiving audio information from one or more microphones, identifying a set of one or more possible spoken words from the audio information, determining a speech input for the computing device based upon comparing the set of one or more possible spoken words from the audio information and the depth information, and taking an action on the computing device based upon the speech input determined.

This Summary is provided to introduce a selection of concepts in a simplified form that are further described below in the Detailed Description, whereas the invention is defined by independent method claim 1 and by independent device claim 11.

Furthermore, the claimed subject matter is not limited to implementations that solve any or all disadvantages noted in any part of this disclosure.

### BRIEF DESCRIPTION OF THE DRAWINGS

FIG. 1 shows a schematic example of a speech recognition environment according to an embodiment of the disclosure.
FIG. 2 is a flow chart illustrating a method for recognizing speech according to an embodiment of the disclosure.
FIG. 3 is a flow chart illustrating a method for recognizing speech according to another embodiment of the disclosure.
FIG. 4 is a flow chart illustrating a method for recognizing speech according to a further embodiment of the disclosure.
FIG. 5 schematically shows a non-limiting computing system.

### DETAILED DESCRIPTION

Computerized speech recognition may pose various challenges. For example, pronunciation of individual words, accent, sharpness, tone, imperfections/impediments, and other variables of human speech may differ widely between users. Additionally, reverberation and/or noise and other unwanted sounds (e.g., loudspeakers, vacuum cleaners, etc.) in the room in which the words are spoken may hinder speech recognition. Further, the context in which the recognized words are spoken may impact such factors as whether a recognized speech segment was intended as a speech input.

Accordingly, embodiments are disclosed that relate to augmenting a speech recognition process with literal and/or contextual information identified in depth information received from a depth camera. For example, in some embodiments, movements of the speaker's mouth, tongue, and/or throat may be identified from the depth information and used to confirm the identity of possible spoken words identified via audio data, identify words not detected in audio data, etc. Additionally, in some embodiments, gestures, postures, etc. performed by the speaker may be identified from the depth information and used to place the identified words into a desired context, such as confirming that the identified spoken words were intended as an input to a computing device. The term "speech recognition" as used herein may include word recognition, speaker recognition (e.g. which of two or more users in an environment is speaking), semantic recognition, emotion recognition, and/or the recognition of any other suitable aspect of speech in a use environment.

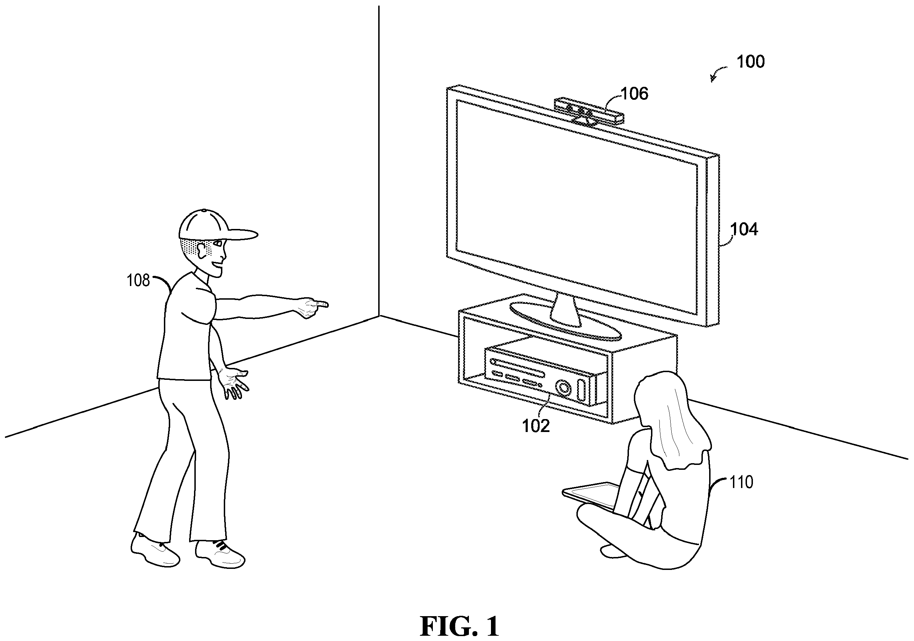

FIG. 1 shows a non-limiting example of a speech recognition environment 100. In particular, FIG. 1 shows a computing system 102 in the form of an entertainment console that may be used to play a variety of different games, play one or more different media types, and/or control or manipulate non-game applications and/or operating systems. FIG. 1 also shows a display device 104 such as a television or a computer monitor, which may be used to present media content, game visuals, non-game computing content, etc., to users.

The speech recognition environment 100 further includes a capture device 106 in the form of a depth camera that visually monitors or tracks objects and users within an observed scene. Capture device 106 may be operatively connected to the computing system 102 via one or more interfaces. As a non-limiting example, the computing system 102 may include a universal serial bus to which the capture device 106 may be connected. Capture device 106 may be used to recognize, analyze, and/or track one or more human subjects and/or objects within a physical space, such as user 108. In one non-limiting example, capture device 106 may include an infrared light source to project infrared light onto the physical space and a depth camera configured to receive infrared light. Capture device also may comprise other sensors, including but not limited to two-dimensional image sensor(s) (e.g. a visible light camera such as an RGB image sensor and/or a grayscale sensor) and one or more microphones (e.g. a directional microphone array). While depicted as providing input to an entertainment console, it will be understood that a depth camera may be used to provide input relevant to speech recognition for any suitable computing system, and may be used in non-gaming environments.

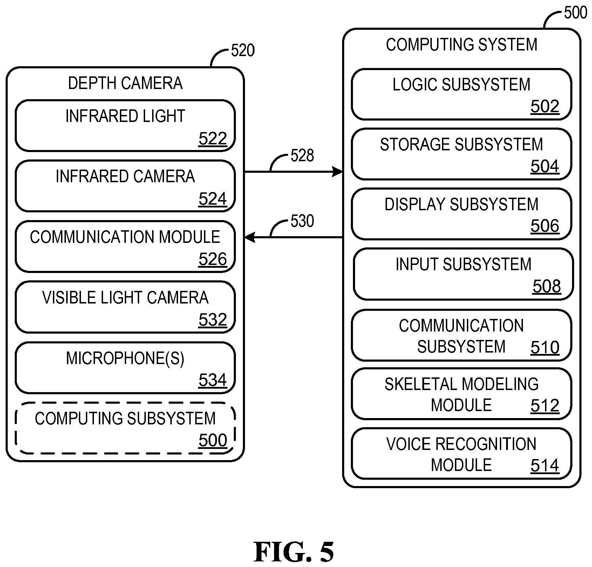

In order to image objects within the physical space, the infrared light source may emit infrared light that is reflected off objects in the physical space and received by the depth camera. Based on the received infrared light, a depth map of the physical space may be constructed. Capture device 106 may output the depth map derived from the infrared light to computing system 102, where it may be used to create a representation of the physical space imaged by the depth camera. The capture device may also be used to recognize objects in the physical space, monitor movement of one or more users, perform gesture recognition, etc. Virtually any depth finding technology may be used without departing from the scope of this disclosure. Example depth finding technologies are discussed in more detail with reference to FIG. 5.

FIG. 1 also shows a scenario in which capture device 106 tracks user 108 so that the movements of the user may be interpreted by computing system 102. In particular, movements of the mouth, tongue, and/or throat of user 108 may be monitored to determine if the user 108 is speaking. If user 108 is speaking, audio information received by computing system 102 (e.g. via one or more microphones incorporated into capture device 106 and/or located external to capture device 106) may be analyzed to recognize one or more of the words spoken by the user. The mouth, tongue, and/or throat movements also may be used to augment the process of identifying the spoken words, for example by confirming that the identified words were spoken, adding additional identified spoken words, etc.

Information from the capture device may also be used to determine various contextual elements of the identified spoken words. For example, if additional users are present in the physical space, such as user 110, the user from which the spoken words were received may be distinguished from other users by comparing the spoken words to the mouth/throat/tongue movements of one or more users in the physical space. Further, facial recognition, speaker identification (e.g. based on the user's height, body shape, gait, etc.), and/or other suitable techniques further may be used to determine the identity of the person speaking. The relative positions and/or orientations of one or more users in a room also may be tracked to help determine whether a speaker is making a speech input. For example, if a user is not facing the capture device when speaking, it may be determined that the user is not speaking to the system. Likewise, where multiple users are visible by the capture device, whether a user is facing the capture device may be used as information to identify which person made a speech input.

Furthermore, once one or more users have been identified, the one or more users may be tracked (via the capture device, for example). This may help to facilitate the efficient matching of future recognized speech to identified speakers, and therefore to quickly identify which speech recognition model/parameters to use for a particular user (e.g. to tune the speech recognition for that user).

Further, gestures performed by user 108 identified via information from capture device 106 may be used to identify contextual information related to identified spoken words. For example, if user 108 is speaking with the intent to control computing system 102 via voice commands, user 108 may perform one or more gestures and/or postures, deliberate or otherwise, that may indicate this intent. Examples include, but are not limited to, pointing toward display device 104, looking at computing system 102 or display device 104 while speaking, or performing a specific gesture that is associated with a recognized user input. Thus, by identifying the gesture performed by user 108 as well as identifying the spoken words, a determination of the intent of the user to control the computing device may be made. Likewise, if user 108 is looking at another user, gesturing toward another user, etc., while speaking, an intent to control the computing device may not be inferred in some embodiments.

Other types of contextual information likewise may be determined from the information received from capture device 106. For example, in some embodiments, an emotional state of user 108 when speaking may be determined by facial and/or body features, postures, gestures, etc., of user 108 from depth information. As yet another example, objects in the imaged physical space may be identified and used to distinguish ambiguous words. For example, compound words such as "quarterback" may be difficult to distinguish from the individual words ("quarter" and "back") that make up the compound word. Therefore, in the case of such ambiguities, depth image data of the physical space may be used to detect objects, actions, etc., that may provide context to help determine the actual word or words spoken. In the specific example of "quarterback," depth image data may be analyzed to determine the presence of objects and/or other contextual clues to help disambiguate these terms, such as money in a user's hand, football-related objects (e.g. is the user seated in front of the television watching a football game), etc. Such information also may be used in some instances to help disambiguate homonyms, such as "ate" and "eight."

Computing system 102 also may be configured to communicate with one or more remote computing devices, not shown in FIG. 1. For example, computing system 102 may receive video content directly from a broadcaster, third party media delivery service, or other content provider. Computing system 102 may also communicate with one or more remote services via the Internet or another network, for example in order to analyze the received audio and/or image data, perform the speech recognition, etc. While the embodiment depicted in FIG. 1 shows computing system 102, display device 104, and capture device 106 as separate elements, in some embodiments one or more of the elements may be integrated into a common device.

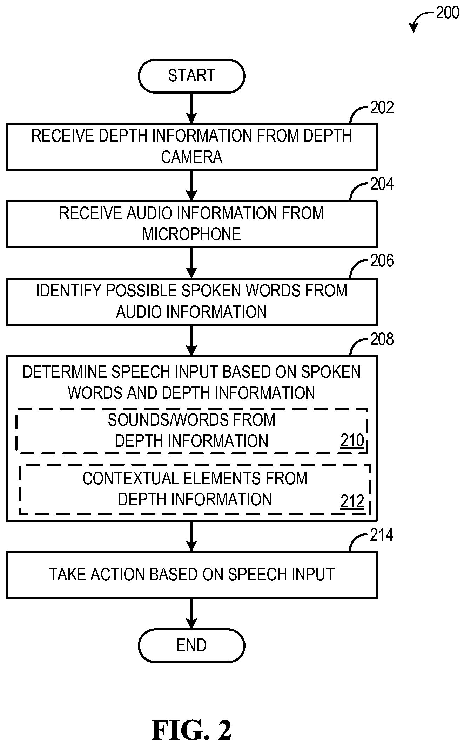

FIG. 2 shows a flow diagram depicting an embodiment of a method 200 for recognizing speech of a user. Method 200 may be performed by a computing device configured to receive and process audio and depth information, such as information received from capture device 106.

At 202, method 200 includes receiving depth information from a depth camera. As explained above, the depth information may be used to construct a depth map of the imaged physical space including one or more users. Additionally, image information from a visible light camera may also be received. At 204, method 200 includes receiving audio information acquired via one or more microphones, which may include directional microphones in some embodiments. At 206, one or more possible spoken words are identified from the audio information. The one or more possible spoken words may be identified by the computing device using any suitable speech recognition processes.

At 208, method 200 includes determining a speech input for the computing device based on the one or more possible spoken words and the depth information. The speech input may comprise a command that indicates an action to be performed by the computing device, content intended to be displayed on a display device and/or recorded by a computing device, and/or any other suitable speech input.

The identified possible spoken words and the depth information may be utilized in any suitable manner to determine the speech input. For example, as indicated at 210, movements of the user's mouth, tongue and/or throat may be utilized to determine possible sounds and/or words spoken by the user. These identified possible sounds/words may then be used to disambiguate any potentially ambiguous possible spoken words from the audio information, and/or to increase a certainty of word identifications, as described in more detail below.

Similarly, in some embodiments, mouth, tongue and/or throat movements may be used to independently determine a set of possible spoken words. This set of possible spoken words may similarly be compared to the set of possible spoken words determined from the audio information to help disambiguate any uncertainty in the correct identification of words from the audio information, to add any potential missed words to the audio data, etc.

As mentioned above, the depth information also may be used to identify contextual elements related to the possible speech segments, as indicated at 212. Any suitable contextual elements may be identified. Examples of such contextual elements may include, but are not limited to, an identity of the user, an emotion of the user, a gesture performed by the user, one or more physical objects in the physical space of the user, etc. The contextual elements identified from the depth information may be used to confirm a speech input identified from the audio information, disambiguate any ambiguous possible spoken words (e.g. compound words, homonyms, etc.), place the speech input into a desired context, utilize a directional microphone system to isolate that speaker from others in the environment, tune the speech recognition based on known speech attributes of the identified user, and/or for any other suitable purposes.

Continuing with FIG. 2, method 200 comprises, at 214, taking an action on the computing device based on upon the speech input. For example, an action indicated by a command speech input may be performed, text content corresponding to the spoken words may be displayed on the display device, etc. Further, in some embodiments, the text content may be tagged with an emotional state, such that words may have a different appearance depending upon the user's detected emotional state when the words were spoken.

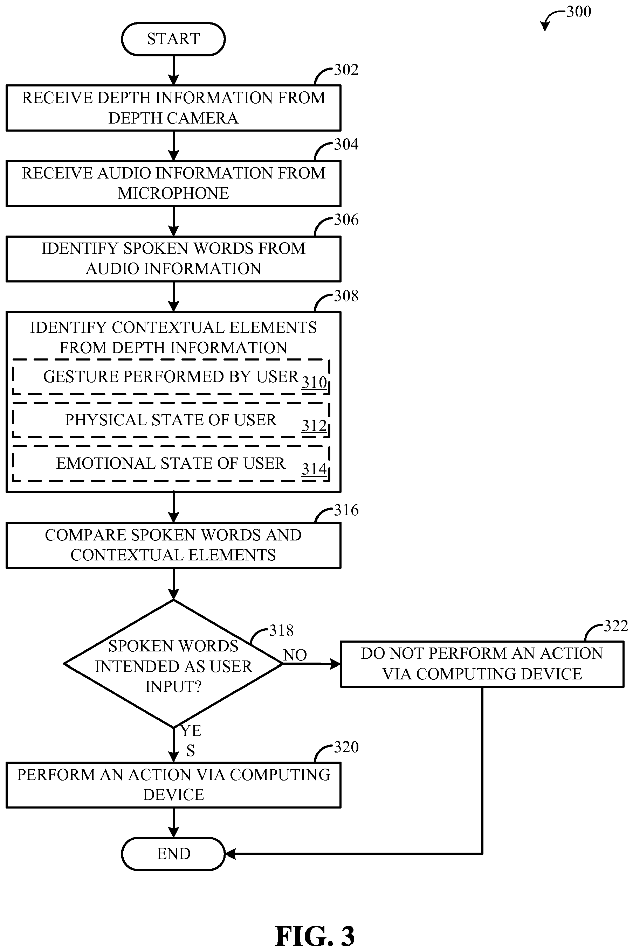

FIG. 3 shows a flow diagram depicting an embodiment of a method 300 for recognizing a command speech input configured to cause a computing device to perform a specified action. Method 300 may be performed by a computing device configured to receive and process audio and depth input. At 302, method 300 includes receiving depth information from a depth camera, and at 304, receiving audio information from one or more microphones. At 306, method 300 comprises identifying one or more possible spoken from the audio information, and at 308, identifying contextual elements from the depth information. Contextual elements may include, but are not limited to, a gesture performed by the user (e.g. movement of mouth, throat, tongue, body, etc.), as indicated at 310, a physical state of a user (e.g. whether a user is sitting, crouching or standing, whether a user's mouth is open or closed, how far a user is from a display, an orientation of the user's head, etc.), as indicated at 312, and/or an emotional state of the user, as indicated at 314. It will be understood that these contextual elements are described for the purpose of example, and are not intended to be limiting in any manner.

At 316, method 300 includes comparing the spoken words and the identified contextual elements. The spoken words and the contextual elements may be compared to determine, for example, whether the spoken words are intended as a speech input directing the computing device to perform a specified action based upon the one or more contextual elements identified from the depth information. For example, a particular gesture performed by the user and identified from the depth information may indicate that the spoken words are intended as user input. As more specific example, the user may direct a gesture at a speech recognition system device, such as pointing at the computing device/display/capture device/etc. while speaking, and/or the user may perform a gesture that matches a known gesture associated with a user input.

Further, an orientation of the user's head may be used to determine if the spoken words are intended as user input. For example, if the user is looking in a particular direction while speaking, such as at toward a speech recognition system device (e.g. a display, computing device, capture device, etc.), it may be determined that the words are intended as a user input to the computing device. Likewise, if the user is looking at another user in the physical space while speaking, it may be indicated that the words are not intended as a user input.

In a further example, one or more emotions of the user may be determined from the depth data and used to determine if the spoken words are intended as a user input. For example, if the user acting in a commanding and/or directive manner (e.g. deliberate, serious, not facially animated), it may be indicated that the words were intended as user input.

At 318, method 300 comprises determining from the comparison at 316 whether the spoken words are intended as user input based upon the contextual information. If the words are determined to be intended as speech input, then method 300 comprises, at 320, performing via the computing device the action associated with the speech input. Likewise, if the words are determined not to be intended as a speech input, then method 300 comprises, at 322, not performing an action via the computing device in response to the words.

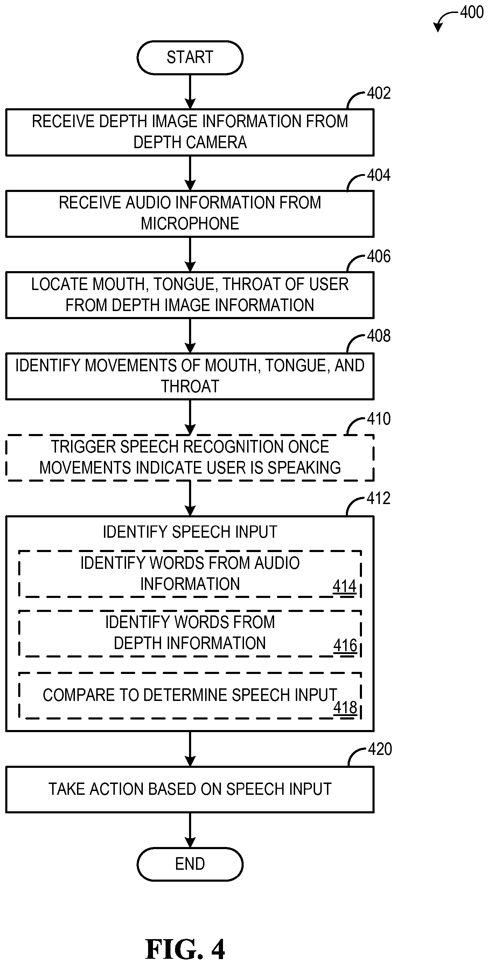

FIG. 4 shows a flow diagram depicting an embodiment of a method 400 for identifying spoken words from a combination of audio and depth information. Method 400 may be performed by a computing device configured to receive audio and depth input, such as computing system 102.

At 402, method 400 comprises receiving depth information from a depth camera, and at 404, receiving audio information from one or more microphone(s). At 406, one or more of the user's mouth, tongue, and throat are located from the depth information. For example, feature extraction may be performed on the depth information to determine where each above-listed facial feature is located.

At 408, movements of the mouth, tongue, and/or throat may be identified. For example, a degree of opening of the user's mouth, position/shape of the tongue, shape/location of the user's lips, etc., as the user speaks may be tracked to identify the movements.

At 410, method 400 optionally includes triggering speech recognition to begin responsive to detecting identified movements of the mouth, tongue and/or throat that indicate the user is speaking. In this way, the operation of a resource-intensive speech recognition process may be avoided until identified movements indicate that the user is actually speaking.

At 412, method 400 comprises identifying a speech input of the user. As explained previously, the speech input may include a command for the computing device to perform an action, or may include input that is to be displayed (e.g. as text) on a display device and/or saved. Identifying the speech input may include for example, identifying one or more possible spoken words from the audio information at 414. The speech input may be identified from the audio data in any suitable manner. Further, as indicated at 416, identifying the speech input may include identifying one or more possible sounds, words, and/or word fragments from the depth information. For example, the mouth, tongue, and/or throat movements of the user may be used to identify sounds, words, etc.

Identifying the speech input also may include, at 418, comparing the one or more possible spoken words identified from the audio information to the one or more possible spoken words or sounds identified from the depth information. This may help to increase a confidence of possible spoken words identified via the audio data, to help disambiguate possibly ambiguous speech (for example, to identify boundaries between words via hand motion analysis), to identify additional words that were missed in the audio data, and/or may be used in any other suitable manner.

As a more specific example, movements of the user's mouth, tongue, and/or throat may be analyzed (e.g. by extracting movement data from the depth images and applying one or more classification functions to the movement data) to identify possible words/sounds spoken. Further, in some embodiments, confidence scores may be applied to the possible words/sounds spoken. Then, the determined possible spoken words/sounds determined from the depth information may be compared to the possible spoken words determined from the audio information, which likewise may include confidence score data in some embodiments. From this comparison, a most likely spoken word or words may be identified, e.g. from a highest combined confidence score, or other suitable metric. It will be understood that any suitable mechanism may be used for comparing the possible spoken sounds/words identified via the depth information and the possible spoken words identified via the audio information.

At 420, method 400 includes taking an action based on the speech input. As described above, any suitable action may be taken. For example, identified speech may be used as a command input to cause the computing device to take an action, may be displayed and/or saved as content, may be used to mark up content based upon a user's determined emotional state when speaking, and/or any other suitable action.

In some embodiments, the above described methods and processes may be tied to a computing system including one or more computers. In particular, the methods and processes described herein may be implemented as a computer application, computer service, computer API, computer library, and/or other computer program product.

FIG. 5 schematically shows a non-limiting embodiment of a computing system 500 that can enact one or more of the methods and processes described above. Computing system 500 is one non-limiting example of computing system 102. Computing system 500 is shown in simplified form. It will be understood that virtually any computer architecture may be used without departing from the scope of this disclosure. In different embodiments, computing system 500 may take the form of a mainframe computer, server computer, desktop computer, laptop computer, tablet computer, home-entertainment computer, network computing device, gaming device, mobile computing device, mobile communication device (e.g., smart phone), etc.

Computing system 500 includes a logic subsystem 502 and a storage subsystem 504. Computing system 500 may optionally include a display subsystem 506, input subsystem 508, communication subsystem 510, and/or other components not shown in FIG. 5.

Logic subsystem 502 includes one or more physical devices configured to execute instructions. For example, the logic subsystem may be configured to execute instructions that are part of one or more applications, services, programs, routines, libraries, objects, components, data structures, or other logical constructs. Such instructions may be implemented to perform a task, implement a data type, transform the state of one or more components, or otherwise arrive at a desired result.

The logic subsystem may include one or more processors configured to execute software instructions. Additionally or alternatively, the logic subsystem may include one or more hardware or firmware logic machines configured to execute hardware or firmware instructions. The processors of the logic subsystem may be single-core or multi-core, and the programs executed thereon may be configured for sequential, parallel or distributed processing. The logic subsystem may optionally include individual components that are distributed among two or more devices, which can be remotely located and/or configured for coordinated processing. Aspects of the logic subsystem may be virtualized and executed by remotely accessible, networked computing devices configured in a cloud-computing configuration.

Storage subsystem 504 includes one or more physical, non-transitory, devices configured to hold data and/or instructions executable by the logic subsystem to implement the methods and processes described herein. When such methods and processes are implemented, the state of storage subsystem 504 may be transformed-e.g., to hold different data.

Storage subsystem 504 may include removable media and/or built-in devices. Storage subsystem 504 may include optical memory devices (e.g., CD, DVD, HD-DVD, Blu-Ray Disc, etc.), semiconductor memory devices (e.g., RAM, EPROM, EEPROM, etc.) and/or magnetic memory devices (e.g., hard-disk drive, floppy-disk drive, tape drive, MRAM, etc.), among others. Storage subsystem 504 may include volatile, nonvolatile, dynamic, static, read/write, read-only, random-access, sequential-access, location-addressable, file-addressable, and/or content-addressable devices.

It will be appreciated that storage subsystem 504 includes one or more physical, non-transitory devices. However, in some embodiments, aspects of the instructions described herein may be propagated in a transitory fashion by a pure signal (e.g., an electromagnetic signal, an optical signal, etc.) that is not held by a physical device for a finite duration. Furthermore, data and/or other forms of information pertaining to the present disclosure may be propagated by a pure signal.

In some embodiments, aspects of logic subsystem 502 and of storage subsystem 504 may be integrated together into one or more hardware-logic components through which the functionally described herein may be enacted. Such hardware-logic components may include field-programmable gate arrays (FPGAs), program- and application-specific integrated circuits (PASIC / ASICs), program- and application-specific standard products (PSSP / ASSPs), system-on-a-chip (SOC) systems, and complex programmable logic devices (CPLDs), for example.

The term "module" may be used to describe an aspect of computing system 500 implemented to perform a particular function. In some cases, a module may be instantiated via logic subsystem 502 executing instructions held by storage subsystem 504. It will be understood that different modules may be instantiated from the same application, service, code block, object, library, routine, API, function, etc. Likewise, the same module may be instantiated by different applications, services, code blocks, objects, routines, APIs, functions, etc. The term "module" may encompass individual or groups of executable files, data files, libraries, drivers, scripts, database records, etc.

It will be appreciated that a "service", as used herein, is an application program executable across multiple user sessions. A service may be available to one or more system components, programs, and/or other services. In some implementations, a service may run on one or more server-computing devices.

When included, display subsystem 506 may be used to present a visual representation of data held by storage subsystem 504. This visual representation may take the form of a graphical user interface (GUI). As the herein described methods and processes change the data held by the storage subsystem, and thus transform the state of the storage subsystem, the state of display subsystem 506 may likewise be transformed to visually represent changes in the underlying data. Display subsystem 506 may include one or more display devices utilizing virtually any type of technology. Such display devices may be combined with logic subsystem 502 and/or storage subsystem 504 in a shared enclosure, or such display devices may be peripheral display devices.

When included, input subsystem 508 may comprise or interface with one or more user-input devices such as a keyboard, mouse, touch screen, or game controller. In some embodiments, the input subsystem may comprise or interface with selected natural user input (NUI) componentry. Such componentry may be integrated or peripheral, and the transduction and/or processing of input actions may be handled on- or off-board. Example NUI componentry may include one or more microphones for speech and/or voice recognition; an infrared, color, steroscopic, and/or depth camera for machine vision and/or gesture recognition; a head tracker, eye tracker, accelerometer, and/or gyroscope for motion detection and/or intent recognition; as well as electric-field sensing componentry for assessing brain activity.

When included, communication subsystem 510 may be configured to communicatively couple computing system 500 with one or more other computing devices. Communication subsystem 510 may include wired and/or wireless communication devices compatible with one or more different communication protocols. As non-limiting examples, the communication subsystem may be configured for communication via a wireless telephone network, or a wired or wireless local- or wide-area network. In some embodiments, the communication subsystem may allow computing system 500 to send and/or receive messages to and/or from other devices via a network such as the Internet.

Further, computing system 500 may include a skeletal modeling module 512 configured to receive imaging information from a depth camera 520 (described below) and identify and/or interpret one or more postures and gestures performed by a user. Computing system 500 may also include a voice recognition module 514 to identify and/or interpret one or more voice commands or spoken words issued by the user detected via one or more microphones (coupled to computing system 500 or the depth camera). While skeletal modeling module 512 and voice recognition module 514 are depicted as being integrated within computing system 500, in some embodiments, one or both of the modules may instead be included in the depth camera 520.

Computing system 500 may be operatively coupled to the depth camera 520. Depth camera 520 may include an infrared light 522 and a depth camera 524 (also referred to as an infrared light camera) configured to acquire video of a scene including one or more human subjects. The video may comprise a time-resolved sequence of images of spatial resolution and frame rate suitable for the purposes set forth herein. As described above with reference to FIG. 1, the depth camera and/or a cooperating computing system (e.g., computing system 500) may be configured to process the acquired video to identify one or more postures and/or gestures of the user, determine a location of and track movements of a user's mouth, tongue, and/or throat, and to interpret such postures and/or gestures as device commands configured to control various aspects of computing system 500.

Depth camera 520 may include a communication module 526 configured to communicatively couple depth camera 520 with one or more other computing devices. Communication module 526 may include wired and/or wireless communication devices compatible with one or more different communication protocols. In one embodiment, the communication module 526 may include an imaging interface 528 to send imaging information (such as the acquired video) to computing system 500. Additionally or alternatively, the communication module 526 may include a control interface 530 to receive instructions from computing system 500. The control and imaging interfaces may be provided as separate interfaces, or they may be the same interface. In one example, control interface 530 and imaging interface 528 may include a universal serial bus.

The nature and number of cameras may differ in various depth cameras consistent with the scope of this disclosure. In general, one or more cameras may be configured to provide video from which a time-resolved sequence of three-dimensional depth maps is obtained via downstream processing. As used herein, the term 'depth map' refers to an array of pixels registered to corresponding regions of an imaged scene, with a depth value of each pixel indicating the depth of the surface imaged by that pixel. 'Depth' is defined as a coordinate parallel to the optical axis of the depth camera, which increases with increasing distance from the depth camera.

In some embodiments, depth camera 520 may include right and left stereoscopic cameras. Time-resolved images from both cameras may be registered to each other and combined to yield depth-resolved video.

In some embodiments, a "structured light" depth camera may be configured to project a structured infrared illumination comprising numerous, discrete features (e.g., lines or dots). A camera may be configured to image the structured illumination reflected from the scene. Based on the spacings between adjacent features in the various regions of the imaged scene, a depth map of the scene may be constructed.

In some embodiments, a "time-of-flight" depth camera may include a light source configured to project a pulsed infrared illumination onto a scene. Two cameras may be configured to detect the pulsed illumination reflected from the scene. The cameras may include an electronic shutter synchronized to the pulsed illumination, but the integration times for the cameras may differ, such that a pixel-resolved time-of-flight of the pulsed illumination, from the light source to the scene and then to the cameras, is discernible from the relative amounts of light received in corresponding pixels of the two cameras.

Depth camera 520 may include a visible light camera 532 (e.g., RGB camera). Time-resolved images from color and depth cameras may be registered to each other and combined to yield depth-resolved color video. Depth camera 520 and/or computing system 500 may further include one or more microphones 534. One or more microphones may determine directional and/or non-directional sounds coming from users in the physical space and/or other sources. Audio data may be recorded by the one or more microphones 534. Such audio data may be determined in any suitable manner without departing from the scope of this disclosure.

While depth camera 520 and computing system 500 are depicted in FIG. 5 as being separate devices, in some embodiments depth camera 520 and computing system 500 may be included in a single device. Thus, depth camera 520 may optionally include computing system 500.

It will be understood that the configurations and/or approaches described herein are exemplary in nature, and that these specific embodiments or examples are not to be considered in a limiting sense, because numerous variations are possible. The specific routines or methods described herein may represent one or more of any number of processing strategies. As such, various acts illustrated and/or described may be performed in the sequence illustrated and/or described, in other sequences, in parallel, or omitted. Likewise, the order of the above-described processes may be changed.

## Claims

1. A method (200) for recognizing speech of a user on a computing device, comprising:
receiving (202) depth information of a physical space from a depth camera (520);
identifying contextual elements in the depth information;
receiving (204) audio information from one or more microphones (534);
identifying (206) a set of one or more possible spoken words from the audio information;
determining (208) a speech input for the computing device based upon comparing the set of one or more possible spoken words from the audio information and the contextual elements, wherein determining (208) the speech input includes disambiguating, in the set of one or more possible spoken words, one or more of
- a homonym and
- a compound word for distinction from the individual words that make up the compound word; and
taking (214) an action on the computing device based upon the speech input determined.

2. The method (200) of claim 1, wherein identifying contextual elements further comprises identifying contextual elements in one or more of audio information from a directional microphone and image information from a visible light camera (532).

3. The method (200) of claim 2, wherein identifying the contextual elements comprises one or more of determining an identity of the user based on one or more of the depth information and information from the visible light camera (532), determining an emotional state of the user, determining a physical state of the user, determining a gesture performed by the user, and identifying one or more objects in a physical space of the user.

4. The method (200) of claim 1, further comprising identifying a set of one or more possible spoken sounds and/or words from the depth information and comparing the set of one or more possible spoken words identified via the audio information to the set of one or more possible spoken sounds and/or words identified via the depth information to determine the speech input.

5. The method (200) of claim 4, wherein identifying the set of one or more possible spoken sounds and/or words from the depth information further comprises identifying one or more mouth, tongue, and/or throat movements of the user, and identifying the set of one or more possible spoken sounds and/or words based on the movements.

6. The method (200) of claim 1, wherein the speech input comprises a command, and wherein taking the action comprises performing the command.

7. The method (200) of claim 1, further comprising identifying which user of a plurality of users is speaking based on one or more of mouth movements and gaze direction.

8. The method (200) of claim 1, wherein the speech input is content to be stored, and wherein taking the action comprises storing the content.

9. The method (200) of claim 1, wherein the speech input comprises content to be displayed on a display device, and wherein taking the action comprises sending the content to the display device.

10. The method (200) of claim 1, wherein a boundary between possible spoken sounds and/or words is determined based on identified hand movements of the user.

11. A computing system (500), comprising a logic subsystem (502) including one or more physical devices configured to execute instructions; and
a storage subsystem (504) comprising one or more physical, non-transitory, devices configured to hold data and/or instructions executable by the logic subsystem (502) to implement the method (200) of any one of the preceding claims.

## Patentansprüche

1. Verfahren (200) zur Spracherkennung eines Benutzers auf einer Rechenvorrichtung, umfassend:
Empfangen (202) von Tiefeninformationen eines physischen Raums aus einer Tiefenkamera (520);
Identifizieren von Kontextelementen in den Tiefeninformationen;
Empfangen (204) von Audioinformationen aus einem oder mehreren Mikrofonen (534);
Identifizieren (206) einer Menge eines oder mehrerer möglicher gesprochener Worten aus den Audioinformationen;
Bestimmen (208) einer Spracheingabe für die Rechenvorrichtung basierend auf einem Vergleichen der Menge eines oder mehrerer möglicher gesprochener Wörter aus den Audioinformationen mit den Kontextelementen, wobei das Bestimmen (208) der Spracheingabe ein Disambiguieren, in der Menge eines oder mehrerer möglicher gesprochener Wörter, eines Homonyms und/oder eines zusammengesetzten Worts zur Unterscheidung von den einzelnen Wörtern, die das zusammengesetzte Wort bilden, umfasst; und
Ausführen (214) einer Aktion auf der Rechenvorrichtung basierend auf der bestimmten Spracheingabe.

2. Verfahren (200) nach Anspruch 1, wobei das Identifizieren von Kontextelementen ferner ein Identifizieren von Kontextelementen in Audioinformationen aus einem Richtmikrofon und/oder Bildinformationen aus einer Kamera für sichtbares Licht (532) umfasst.

3. Verfahren (200) nach Anspruch 2, wobei das Identifizieren der Kontextelemente umfasst: Bestimmen einer Identität des Benutzers basierend auf den Tiefeninformationen und/oder den Informationen aus der Kamera (532) für sichtbares Licht, Bestimmen eines emotionalen Zustandes des Benutzers, Bestimmen eines physischen Zustandes des Benutzers, Bestimmen einer vom Benutzer ausgeführten Geste und/oder Identifizieren eines oder mehrerer Objekte in einem physischen Raum des Benutzers.

4. Verfahren (200) nach Anspruch 1 ferner umfassend ein Identifizieren einer Menge eines oder mehrerer möglicher gesprochener Laute und/oder Wörter aus den Tiefeninformationen und Vergleichen der Menge eines oder mehrerer möglicher gesprochener Wörter, die über die Audioinformationen identifiziert wurden, mit der Menge eines oder mehrerer möglicher gesprochener Laute und/oder Wörter, die über die Tiefeninformationen identifiziert wurden, um die Spracheingabe zu bestimmen.

5. Verfahren (200) nach Anspruch 4, wobei das Identifizieren der Menge eines oder mehrerer möglicher gesprochener Laute und/oder Wörter aus den Tiefeninformationen ferner ein Identifizieren einer oder mehrerer Mund-, Zungen- und/oder Halsbewegungen des Benutzers umfasst, sowie ein Identifizieren der Menge eines oder mehrerer möglicher gesprochener Laute und/oder Wörter basierend auf den Bewegungen.

6. Verfahren (200) nach Anspruch 1, wobei die Spracheingabe einen Befehl umfasst, und wobei das Ausführen einer Aktion ein Ausführen des Befehls umfasst.

7. Verfahren (200) nach Anspruch 1, ferner umfassend ein Identifizieren welcher Benutzer einer Mehrzahl von Benutzern spricht basierend auf Mundbewegungen und/oder Blickrichtung.

8. Verfahren (200) nach Anspruch 1, wobei die Spracheingabe zu speichernder Inhalt ist, und wobei das Ausführen der Aktion ein Speichern des Inhalts umfasst.

9. Verfahren (200) nach Anspruch 1, wobei die Spracheingabe Inhalt umfasst, der auf einer Anzeigevorrichtung angezeigt werden soll, und wobei das Ausführen der Aktion ein Senden des Inhalts an die Anzeigevorrichtung umfasst.

10. Verfahren (200) nach Anspruch 1, wobei eine Grenze zwischen möglichen gesprochenen Lauten und/oder Wörtern basierend auf identifizierten Handbewegungen des Benutzers bestimmt wird.

11. Rechensystem (500), umfassend
ein Logiksubsystem (502), das eine oder mehrere physische Vorrichtungen umfasst, die ausgelegt sind, Instruktionen auszuführen; und
ein Speichersubsystem (504), das eine oder mehrere physische nichttransitorische Vorrichtungen umfasst, die ausgelegt sind, Daten und/oder Instruktionen zu halten, die vom Logiksubsystem (502) ausführbar sind, um das Verfahren (200) nach einem der vorhergehenden Ansprüche auszuführen.

## Revendications

1. Procédé (200) pour la reconnaissance vocale sur un dispositif informatique comprenant:
la réception (202) d'une information de profondeur concernant un espace physique provenant d'une caméra de profondeur (520);
l'identification d'éléments contextuels dans l'information de profondeur;
la réception (204) d'une information audio provenant d'un ou de plusieurs microphones (534);
l'identification (206) d'un ensemble d'un ou de plusieurs mots parlés possibles à partir de l'information audio;
la détermination (208) de l'entrée vocale pour le dispositif informatique, basée sur la comparaison entre l'ensemble d'un ou de plusieurs mots parlés possibles provenant de l'information audio et
les éléments contextuels, dans lequel la détermination (208) de l'entrée vocale comprend la levée du doute, dans l'ensemble formé par un ou plusieurs mots parlés possibles, sur un homonyne et/ou un mot composé pour la distinction des mots individuels constituant le mot composé; et
l'accomplissement (214) d'une action sur le dispositif d'ordinateur basée sur l'entrée vocale déterminée.

2. Procédé (200) selon la revendication 1, dans lequel l'identification des éléments contextuels comprend en outre l'identification d'éléments contextuels dans une information audio provenant d'un microphone directionnel et/ou une information visuelle provenant d'une caméra à lumière visible (532).

3. Procédé (200) selon la revendication 2, dans lequel l'identification des éléments contextuels comprend déterminer l'identité d'un utilisateur, basée sur l'information de profondeur et/ou l'information provenant de la caméra à lumière visible (532), la détermination d'un état émotionnel de l'utilisateur, la détermination d'un état physique de l'utilisateur, la détermination d'un geste fait par l'utilisateur, et/ou l'identification d'un ou de plusieurs objets dans un espace physique de l'utilisateur.

4. Procédé (200) selon la revendication 1, comprenant en outre l'identification d'un ensemble d'un ou de plusieurs sons vocaux et/ou de mots provenant de l'information de profondeur et la comparaison d'un ensemble de mots parlés possibles identifiés à travers l'information audio relative à l'ensemble d'un ou de plusieurs sons vocaux possibles et/ou de mots possibles identifiés à travers l'information de profondeur pour déterminer l'entrée vocale.

5. Procédé (200) selon la revendication 4, dans lequel l'identification de l'ensemble d'un ou de plusieurs sons vocaux possibles et/ou de mots parlés possibles provenant de l'information de profondeur comprend en outre l'identification d'un ou de plusieurs mouvements de la bouche, de la langue et/ou de la gorge de l'utilisateur, et l'identification de l'ensemble d'un ou de plusieurs sons vocaux possibles et/ou de mots parlés possibles, basée sur les mouvements.

6. Procédé (200) selon la revendication 1 dans lequel l'entrée vocale comprend une commande, et dans lequel l'accomplissement de l'action comprend d'exécuter la commande.

7. Procédé (200) selon la revendication 1 comprenant en outre l'identification parmi une pluralité d'utilisateurs, de l'utilisateur qui parle, basée sur les mouvements de la bouche et/ou la direction du regard.

8. Procédé (200) selon la revendication 1 dans lequel l'entrée vocale est le contenu à être mémorisé, et dans lequel l'accomplissement de l'action comprend la mémorisation du contenu.

9. Procédé (200) selon la revendication 1 dans lequel l'entrée vocale comprend le contenu à afficher sur un dispositif d'affichage, et dans lequel l'accomplissement de l'action comprend l'envoi du contenu au dispositif d'affichage.

10. Procédé (200) selon la revendication 1 dans lequel une délimitation entre les sons vocaux possibles et/ou les mots possibles est déterminée en fonction des mouvements identifiés de la main de l'utilisateur.

11. Système informatique (500) comprenant:
un sous-système logique (502) se composant d'un ou de plusieurs dispositifs physiques configurés pour exécuter des instructions et
un sous-système de stockage (504) comprenant un ou plusieurs dispositifs physiques non transitoires configurés pour retenir des données et/ou des instructions exécutables par le sous-système logique (502) pour la mise en oeuvre du procédé (200) selon l'une quelconque des revendications précédentes.
